# EUROPEAN PATENT SPECIFICATION

(11) **EP 0 533 934 B1**
(45) Date of publication and mention of the grant of the patent: **17.04.1996**
(21) Application number: 91914663.9
(22) Date of filing: 22.08.1991
(51) Int. Cl.: F03B 7/00

(54) **HYDRAULIC POWER DEVICE**
HYDRAULISCHES KRAFTWERK
INSTALLATION EXPLOITANT LA FORCE HYDRAULIQUE

(30) Priority: 20.03.1991 JP 55216/91
(43) Date of publication of application: 31.03.1993
(73) Proprietor: TONOUCHI, Kooji, Yokohama-shi, Kanagawa 220 (JP)
(72) Inventor: TONOUCHI, Kooji, Yokohama-shi, Kanagawa 220 (JP)
(74) Representative: Chauchard, Robert
(86) International application number: JP9101117
(87) International publication number: WO9216744

(56) References cited:
- DE-A- 3 404 331
- FR-A- 675 233
- GB-A- 223 384
- JP-A-52 029 548
- JP-A-52 144 548
- JP-A-59 183 080
- JP-B-24 002 658
- US-A- 1 500 051
- US-A- 3 958 130
- PATENT ABSTRACTS OF JAPAN no. 2051 (M-77); JP A 52 29549 (KUNIO SAITO) 3 May 1977.

## Description

The present invention relates to a hydraulic power device, and more particularly to a power device suitable for hydroelectric generation or the like.

In order to use natural energy including wind power, hydraulic power, solar light, or the like, a variety of power devices or electric generators have been proposed and developed. Among these, power devices with comparatively small capacity utilizing natural water stream, such as working devices for agriculture or private power generation, bucket -type hydraulic water wheels, made of materials such as wood, which rotate with respect to a horizontal axis in a vertical plane have been utilized from the ancient periods.

However, in power devices which utilize a comparatively small water head, it is necessary to considerably increase the radius and width of the water wheel, in order to obtain necessary amount of power capacity with a single device. This requirement results however in a limitation in manufacture or installation of the devices.

GB-A-223 384, JP-A-52 29 548 and US-A-1 500 051 disclose hydraulic power devices of the type comprising a plurality of water wheels each having a horizontal shaft rotatably supported by a frame and a plurality of peripheral buckets, and transmitting means rotatably connecting the water wheels to one another.

FR-A-675 233 relates to a hydraulic power device which differs from these devices in that the shaft of its water wheels is inclined relative to the horizontal line.

However, the above hydraulic power devices are cumbersome as their water wheels are spaced apart from one another in the direction of the water current, and their transmitting means extend laterally relative to the water wheels.

The present invention remedies these drawbacks and, to do so, it provides for a hydraulic power device of the type disclosed in the first three above-mentioned documents, which is characterized in that the water wheels each comprises two side faces between which the buckets are mounted, and in that the transmitting means are formed by a plurality of teeth having the same pitch and provided along the periphery of both side faces of each water wheel, the teeth of one water wheel being in mesh with the teeth of the adjacent water wheel(s).

The hydraulic power device according to the present invention is indeed less cumbersome since its water wheels are not spaced apart and its transmitting means do not extend laterally.

According to the present invention, the frame comprises two vertical supports mounted on both sides of each water wheel and supporting a water vessel disposed for continuously supplying water to the buckets of the corresponding water wheel.

Furthermore, the buckets of the water wheels are separated from the adjacent ones by radial walls.

One preferred embodiment of the present invention will now be described with reference to the annexed drawings, wherein :
FIG.1 is a front view of a serially connected three-wheel hydraulic power device according to the present invention; and

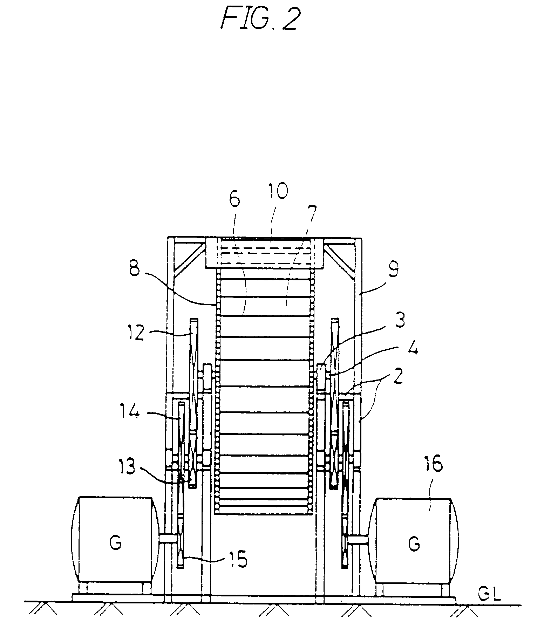

FIG.2 is a side elevational view of one water wheel of FIG.1.

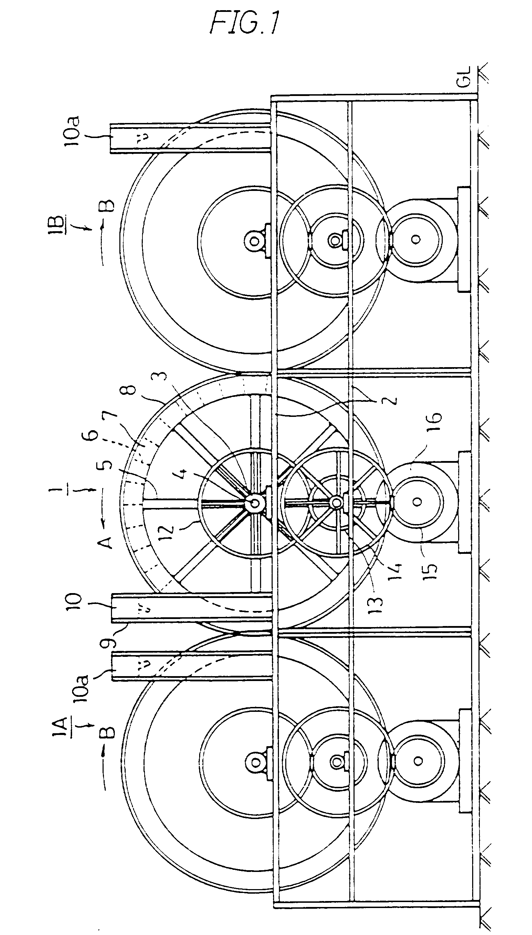

FIG.1 is a front view illustrating a hydraulic power device, in which three water wheels are connected in series, according to the present invention. References 1, 1A and 1B designate three water wheels each having substantially the same construction. The central water wheel 1 has a horizontal rotary shaft 4 which is rotatably supported by bearings 3 disposed on a frame 2. Spokes 5 are radially mounted on the boss of the rotary shaft 4. A plurality of buckets 7 are continuously mounted on the periphery of the wheel 1. Each bucket 7 is separated from the adjacent ones by a radial wall 6 provided around the periphery of the wheel 1.

A plurality of teeth forming a transmitting means 8 having the same pitch are provided around the periphery of both side faces of wheel 1.

On frame 2, adjacent to each side of water wheel 1, there are mounted vertical supports 9, on the top of which a water vessel 10 is disposed. Water is continuously supplied through a suitable water channel which is not shown. The wheel 1 is driven in rotation in direction A. The water in each bucket successively is discharged through a channel which is not shown.

The rotational power generated on shaft 4 is transmitted through a gearset including a gear 12, a pinion 13, gear 14, and a pinion 15, wherein the rotational speed is increased through two steps, to the generators 16 which are driven at a predetermined rotational speed.

The other water wheels 1A and 1B are connected to the central wheel 1 through each of large gears 8 provided on the periphery thereof. These wheels are driven by the water falling from the associated water reservoir 10a and are symmetrically disposed with respect to the central wheel. As a result, wheels 1A and 1B are rotated in the direction opposite to that of wheel 1, and therefore the wheels are driven from each other to produce an increased power. The overall moment of inertia becomes 3 times that of one wheel to increase the flywheel effect. Accordingly, the speed variation of the generators 16 is largely minimized.

The inventor has constructed a hydraulic power device including three wheels made of steel each being 2.6 m in diameter and 0.6 m in width. The test result has proved that the device was small sized and rigid in construction, and convenient in manufacture, transportation, installation and maintenance thereof. Therefore, its wide use has been expected.

Instead of the three-wheel construction, those including two wheels, and four or more wheels may be formed. The single wheel construction is also utilized. As transmitting means between each wheel, sprocket wheels or power chains, or the like, may be used. In this case, the rotating direction of each wheel is the same.

A water head of 1.5 m is used in the aforementioned embodiment. Also, a zero water head, in which the wheel directly engages the surface of water stream with its lowest bucket, may be . used. Generators and speed increasing means are provided not below but in the same horizontal level as the wheels.

The generators may be installed on one side of the wheels, instead of both sides thereof. Also, necessary number of generators connected in series may be installed. Powered loads other than generators, such as a lifting pump, threshing machine, or other power machines, may be connected.

Also, speed-up or speed-down means may be used as necessary.

### INDUSTRIAL APPLICABILITY

As hereinabove stated, the hydraulic power device of the invention, comprising a plurality of serially connected wheels, is utilized in hydraulic generation, where a large-scaled single wheel is difficult to be installed due to physical limitations, such as in use for agricultural working devices and private power generation sets or the like.

## Claims

1. A hydraulic power device comprising a plurality of water wheels (1A, 1, 1B) each having a horizontal shaft (4) rotatably supported by a frame (2) and a plurality of peripheral buckets (7), and transmitting means (8) rotatably connecting the water wheels to one another, characterized in that the water wheels (1A, 1, 1B) each comprises two side faces between which the buckets (7) are mounted, and in that the transmitting means (8) are formed by a plurality of teeth having the same pitch and provided along the periphery of both side faces of each water wheel, the teeth of one water wheel being in mesh with the teeth of the adjacent water wheel(s).

2. The hydraulic power device according to claim 1, characterized in that the frame (2) comprises two vertical supports (9) mounted on both sides of each water wheel (1A, 1, 1B) and supporting a water vessel (10) disposed for continuously supplying water to the buckets (7) of the corresponding water wheel.

3. The hydraulic power device according to claim 1 or 2, characterized in that the buckets (7) of the water wheels (1A, 1, 1B) are separated from the adjacent ones by radial walls (6).

## Patentansprüche

1. Hydraulisches Kraftwerk bestehend aus mehreren Wasserrädern (1A, 1, 1B) mit je einer von einem Gestell (2) drehbar gehaltenen horizontalen Welle (4), aus mehreren Umfangszellen (7) und aus die Wasserräder drehbar miteinander verbindenden Übertragungsmitteln (8), dadurch gekennzeichnet, daß die Wasserräder (1A, 1, 1B) je zwei Seitenflächen aufweisen, zwischen denen die Zellen (7) angebracht sind, und daß die Übertragungsmittel (8) aus mehreren Zähnen bestehen, die den gleichen Abstand aufweisen und am Umfang beider Seitenflächen jedes Wasserrades vorgesehen sind, wobei die Zähne eines Wasserrades mit den Zähnen des angrenzenden Wasserrades bzw. der angrenzenden Wasserräder greifen.

2. Hydraulisches Kraftwerk nach Anspruch 1, dadurch gekennzeichnet, daß das Gestell (2) zwei vertikale Stützen (9) aufweist, die an beiden Seiten jedes Wasserrades (1A, 1, lB) angebracht sind, und die einen Wasserbehälter (10) unterstützen, welcher dazu vorgesehen ist, den Zellen (7) des entsprechenden Wasserrades kontinuierlich Wasser zuzuführen.

3. Hydraulisches Kraftwerk nach Anspruch 1 oder 2, dadurch gekennzeichnet, daß die Zellen (7) der Wasserräder (1A, 1, 1B) durch radiale Wände (6) von den angrenzenden Zellen getrennt sind.

## Revendications

1. Dispositif à énergie hydraulique comprenant plusieurs roues hydrauliques (1A, 1, 1B) respectivement pourvues d'un arbre horizontal (4) supporté mobile en rotation par un bâti (2) et de plusieurs augets périphériques (7), et des moyens de transmission (8) qui relient les roues hydrauliques les unes aux autres d'une manière rotative, caractérisé en ce que les roues hydrauliques (1A, 1, 1B) comprennent chacune deux faces latérales entre lesquelles les augets (7) sont montés, et en ce que les moyens de transmission (8) sont formés par plusieurs dents qui ont le même pas et qui sont disposées le long de la périphérie des deux faces latérales de chacune des roues hydrauliques, les dents de chaque roue hydraulique engrenant avec les dents de la ou des roue(s) hydraulique(s) adjacente (s).

2. Dispositif à énergie hydraulique selon la revendication 1, caractérisé en ce que le bâti (2) comprend deux supports verticaux (9) montés de part et d'autre de chaque roue hydraulique (1A, 1, 1B) et supportant un bac à eau (10) conçu pour fournir continuellement de l'eau aux augets (7) de la roue hydraulique correspondante.

3. Dispositif à énergie hydraulique selon la revendication 1 ou 2, caractérisé en ce que les augets (7) des roues hydrauliques (1A, 1, 1B) sont séparés des augets adjacents par des parois radiales (6).
